# EUROPEAN PATENT SPECIFICATION

(11) **EP 2 811 266 B1**
(45) Date of publication and mention of the grant of the patent: **07.12.2016**
(21) Application number: 13171028.7
(22) Date of filing: 07.06.2013
(51) Int. Cl.: G01F 1/692, G01F 1/684

(54) **Fluid flow sensor**
Durchflusssensor
Capteur d'écoulement de fluide

(43) Date of publication of application: 10.12.2014
(73) Proprietor: Honeywell Technologies Sarl, 1180 Rolle (CH)
(72) Inventor: Cattaneo, Marco, 21047 Saronno, VA (IT); Pastori, Marco Andrea, 20010 Vanzago, MI (IT)
(74) Representative: Sturm, Christoph

(56) References cited:
- EP-A2- 1 227 326
- EP-A2- 1 643 219
- US-A- 5 158 801
- US-A- 5 369 994
- US-A1- 2004 118 202

## Description

The present patent application relates to a fluid flow sensor according to the preamble of claim 1.

EP 1 643 219 A2 discloses a fluid flow sensor comprising a heating resistor disposed on a sensing surface of a substrate, comprising a plurality of thermal sensitive resistors disposed on the sensing surface of the substrate, and further comprising an electronic circuit to determine a flow rate of the fluid to measured based on signals provided by the thermal sensitive resistors. According to the prior art EP 1 643 219 A2, there are in total four thermal sensitive resistors disposed on the substrate, wherein a first thermal sensitive resistor and a third thermal sensitive resistor are located at an adjacent upstream side of the heating resistor in a flow direction of a fluid to measured, and wherein a second thermal sensitive resistor and a fourth thermal sensitive resistor are located at an adjacent downstream side of the heating resistor in the flow direction of a fluid to measured. Each of the four thermal sensitive resistors disposed on the substrate comprises first resistor trace portions running parallel to the flow direction of the fluid to measured, and second resistor trace portions running perpendicular to the flow direction of the fluid to measured. The first resistor trace portions and the second resistor trace portions of the four thermal sensitive resistors provide for each of the four thermal sensitive resistors two square-shaped and spiral-like thermal sensitive resistor sections. The four thermal sensitive resistors disposed on the substrate configure a bridge circuit. The sum of the length of first resistor trace portions running parallel to the flow direction is equal the sum of the length of the second resistor trace portions running perpendicular to the flow direction.

US 5,158,801 A discloses in the section prior art a fluid flow sensor having hot-film sensor elements, namely upstream, center and downstream hot-film sensor elements. The center hot-film sensor elements may be heated by a constant temperature anemometer. The upstream and downstream hot-film sensor elements are connected into two legs of a differential bridge amplifier circuit.

Against this background, a novel fluid flow sensor is provided. The fluid flow sensor is defined in the claim 1.

The fluid flow sensor according to the present application has only two thermal sensitive resistors disposed on the substrate. The other two resistors which configure together with the thermal sensitive resistors the bridge circuit are disposed on the printed circuit board carrying the electronic circuit. Each of the two thermal sensitive resistors comprises three square-shaped and spiral-like thermal sensitive resistor sections being positioned immediately side-by-side perpendicular to the flow direction of the fluid to measured. The above combination of features provides a fluid flow sensor that has a simple design and that allows a reliable fluid flow measurement even in case of turbulences in the fluid flow to be measured. The fluid flow sensor according to the present application provides improved measuring properties especially for turbulent flow conditions of the fluid to be measured and at the same time a simple design.

According to a preferred embodiment, the resistors provided on the printed circuit board which configure together with thermal sensitive resistor the bridge circuit are under operational conditions of the fluid flow sensor thermal non-sensitive. Such a design of a fluid flow sensor is simple and allows a reliable fluid flow measurement.

According to a preferred embodiment, the sum of the length of the second resistor trace portions running perpendicular to the flow direction is larger than the sum of the length of the first resistor trace portions running parallel to the flow direction. Such a design of a fluid flow sensor is simple and allows a reliable fluid flow measurement even in case of turbulences in the fluid flow to be measured.

Preferred developments of the invention are provided by the dependent claims and the description which follows. Exemplary embodiments are explained in more detail on the basis of the drawing, in which:

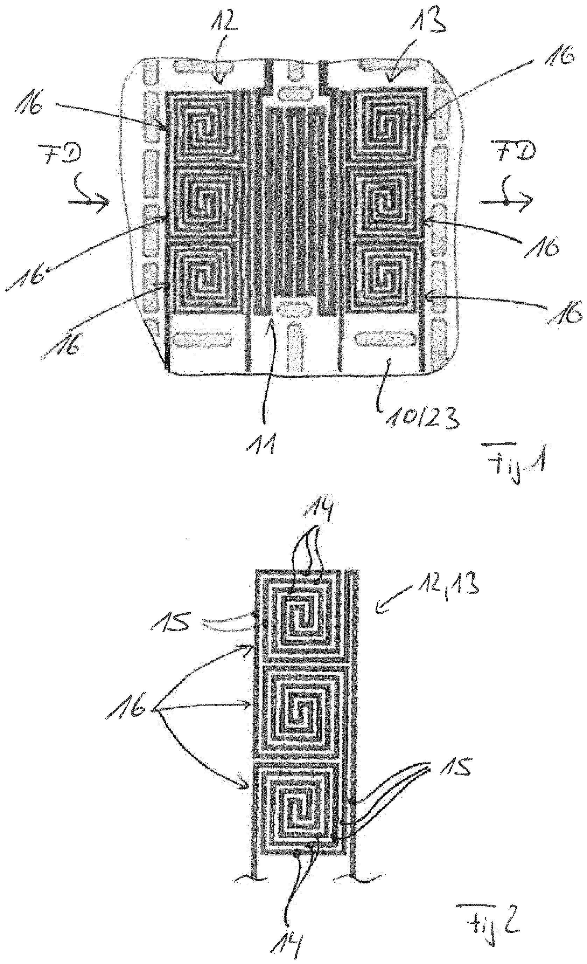

- Figure 1: shows a plan view of a detail of a substrate of a fluid flow sensor according to the present application;
- Figure 2: shows a detail of Figure 1; and

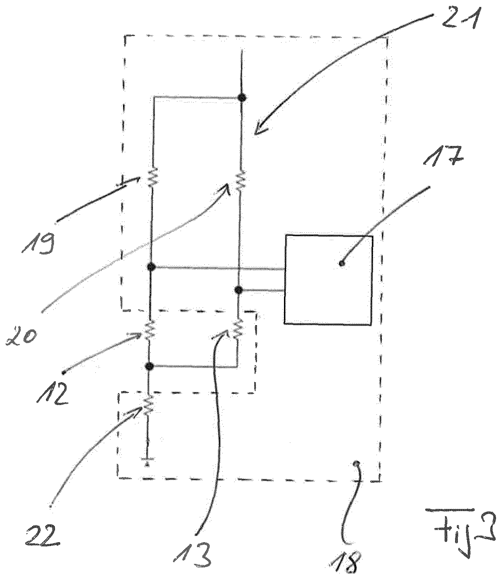

- Figure 3: shows a schematic drawing of a bridge circuit of the fluid flow sensor according to the present application.

The present application relates to a fluid flow sensor to determine a flow rate of a fluid to measured.

The fluid flow sensor comprises a substrate 10. The substrate 10 provides a sensing surface 23 that can be brought into direct or indirect contact with a fluid to measured.

The substrate 10 is preferably provided a thin film substrate.

The fluid flow sensor comprises a heating resistor 11 being disposed on the sensing surface 23 of the substrate 10.

The heating resistor 11 is preferably comb-tooth shaped.

In addition, the fluid flow sensor comprises thermal sensitive resistors 12, 13 being disposed on the sensing surface 23 of the substrate 10.

A first thermal sensitive resistor 12 is located at an adjacent upstream side of the heating resistor 11 in a flow direction FD of a fluid to measured.

On the upstream side of the heating resistor 11 there is disposed only one thermal sensitive resistor 12 on the sensing surface 23 of the substrate 10.

A second thermal sensitive resistor 13 is located at an adjacent downstream side of the heating resistor 11 in a flow direction FD of a fluid to measured.

On the downstream side of the heating resistor 11 there is disposed only one thermal sensitive resistor 13 on the sensing surface 23 of the substrate 10.

Each of the thermal sensitive resistors 12, 13 disposed on the substrate 10 comprises first resistor trace portions 14 running parallel to the flow direction FD of the fluid to measured and second resistor trace portions 15 running perpendicular to the flow direction FD of the fluid to measured.

The first resistor trace portions 14 and the second resistor trace portions 15 of the first thermal sensitive resistor 12 run perpendicular to each other and provide square-shaped and spiral-like thermal sensitive resistor sections 16 of the first thermal sensitive resistor 12.

The first resistor trace portions 14 and the second resistor trace portions 15 of the first thermal sensitive resistor 12 provide for the first thermal sensitive resistor 12 three square spiral thermal sensitive resistor sections 16 being connected in series. The three square spiral thermal sensitive resistor sections 16 of the first thermal sensitive resistor 12 are positioned immediately side-by-side in the direction perpendicular to the flow direction FD of the fluid to measured.

The first resistor trace portions 14 and the second resistor trace portions 15 of the second thermal sensitive resistor 13 run also perpendicular to each other and provide square-shaped and spiral-like thermal sensitive resistor sections 16 of the second thermal sensitive resistor 13.

The first resistor trace portions 14 and the second resistor trace portions 15 of the second thermal sensitive resistor 13 provide for the second thermal sensitive resistor 13 three square spiral thermal sensitive resistor sections 16 being connected in series. The three square spiral thermal sensitive resistor sections 16 of the second thermal sensitive resistor 13 are positioned immediately side-by-side in the direction perpendicular to the flow direction FD of the fluid to measured.

For each of the two thermal sensitive resistors 12 and 13, the sum of the length of the second resistor trace portions 15 running perpendicular to the flow direction FD is larger than the sum of the length of the first resistor trace portions 14 running parallel to the flow direction FD.

Preferably, the ratio of the sum of the length of second resistor trace portions 15 running perpendicular to the flow direction FD and the sum of the length of the first resistor trace portions 14 running parallel to the flow direction FD is for each of the two thermal sensitive resistors 12 and 13 between 1,3 and 1,7, most preferably between 1,4 and 1,6.

In the embodiment shown, the above ratio of the sum of the length of second resistor trace portions 15 running perpendicular to the flow direction FD and the sum of the length of the first resistor trace portions 14 running parallel to the flow direction FD is for each of the two thermal sensitive resistors 12 and 13 approximately 1,5.

The fluid sensor further comprises an electronic circuit 17 to determine a flow rate of the fluid to measured based on signals provided by the thermal sensitive resistors 12, 13.

The electronic circuit 17 is provided by a printed circuit board 18.

The two thermal sensitive resistors 12, 13 disposed on the substrate 10 configure together with resistors 19, 20 provided by the printed circuit board 18 a bridge circuit 21.

Only two resistors 12, 13 of the bridge circuit 21 are disposed on the substrate 10. The other two resistors 19, 20 of the bridge circuit 21 are disposed on the printed circuit board 18.

The resistors 19, 20 provided on the printed circuit board 18 which configure together with the thermal sensitive resistor 12, 13 provided on the substrate 10 the bridge circuit 21 are preferably under operational conditions of the fluid flow sensor thermal non-sensitive.

Another resistor 22 disposed on printed circuit board 18 is connected in series to the bridge circuit 21 provided by the resistors 12, 13, 19 and 20.

The bridge circuit 21 is electrically connected to the electronic circuit 17 so that the electronic circuit 17 is able to determine the flow rate of the fluid to measured.

Such a design of a fluid flow sensor is simple and allows a reliable flow measurement. The fluid flow sensor according to the present application provides improved measuring properties especially for turbulent flow conditions of the fluid to be measured and has at the same time a simple design.

### List of reference signs

- 10: substrate
- 11: heating resistor
- 12: thermal sensitive resistor
- 13: thermal sensitive resistor
- 14: first resistor trace portion
- 15: second resistor trace portion
- 16: thermal sensitive resistor section
- 17: electronic circuit
- 18: printed circuit board
- 19: resistor
- 20: resistor
- 21: bridge circuit
- 22: resistor
- 23: sensing surface

## Claims

1. Fluid flow sensor, comprising
a substrate (10) providing a sensing surface (23) that can be brought into direct or indirect contact with a fluid to measured;
a heating resistor (11) disposed on the sensing surface (23) of the substrate (10);
thermal sensitive resistors (12, 13) disposed on the sensing surface (23) of the substrate (10), wherein
a first thermal sensitive resistor (12) is located at an adjacent upstream side of the heating resistor (11) and a second thermal sensitive resistor (13) is located at an adjacent downstream side of the heating resistor (11) in a flow direction of the fluid to measured,
each of the thermal sensitive resistors (12, 13) comprises first resistor trace portions (14) running parallel to the flow direction of the fluid to measured and second resistor trace portions (15) running perpendicular to the flow direction of the fluid to measured,
the first resistor trace portions (14) and the second resistor trace portions (15) of the first thermal sensitive resistor (12) and of the second thermal sensitive resistor (13) provide for each of the thermal sensitive resistors (12, 13) square-shaped and spiral-like thermal sensitive resistor sections (16);
an electronic circuit (17) to determine a flow rate of the fluid to measured based on signals provided by the thermal sensitive resistors (12, 13);
**characterized in that**
on the upstream side of the heating resistor (11) and on the downstream side of the heating resistor (11) there is located each one thermal sensitive resistor (12, 13);
the two thermal sensitive resistors (12, 13) disposed on the substrate (10) configure together with resistors (19, 20) provided on a printed circuit board (18) a bridge circuit (21), wherein the printed circuit board (18) provides the electronic circuit (17);
the resistor trace portions (14, 15) of each thermal sensitive resistor (12, 13) provide for each of said thermal sensitive resistors (12, 13) three square-shaped and spiral-like thermal sensitive resistor sections (16) being positioned immediately side-by-side in the direction perpendicular to the flow direction of the fluid to measured.

2. Fluid flow sensor as claimed in claim 1, **characterized in that** the resistors (19, 20) provided on the printed circuit board (18) which configure together with thermal sensitive resistor (12, 13) provided on the substrate (10) the bridge circuit (21) are under operational conditions of the fluid flow sensor thermal non-sensitive.

3. Fluid flow sensor as claimed in claim 1 or 2, **characterized in that** the sum of the length of the second resistor trace portions (15) running perpendicular to the flow direction is larger than the sum of the length of the first resistor trace portions (14) running parallel to the flow direction.

4. Fluid flow sensor as claimed in one of claims 1 to 3, **characterized in that** the ratio of the sum of the length of second resistor trace portions (15) running perpendicular to the flow direction and the sum of the length of the first resistor trace portions (14) running parallel to the flow direction is between 1,3 and 1,7.

5. Fluid flow sensor as claimed in claim 4, **characterized in that** the ratio of the sum of the length of second resistor trace portions (15) running perpendicular to the flow direction and the sum of the length of the first resistor trace portions (14) running parallel to the flow direction is between 1,4 and 1,6.

6. Fluid flow sensor as claimed in claim 5, **characterized in that** the ratio of the sum of the length of second resistor trace portions (15) running perpendicular to the flow direction and the sum of the length of the first resistor trace portions (14) running parallel to the flow direction is approximately 1,5.

## Patentansprüche

1. Fluidströmungssensor, umfassend
ein Substrat (10), das eine Sensoroberfläche (23) bereitstellt, die in direkten oder indirekten Kontakt mit einem zu messenden Fluid gebracht werden kann;
einen Heizwiderstand (11), der auf der Sensoroberfläche (23) des Substrats (10) angeordnet ist;
wärmeempfindliche Widerstände (12, 13), die auf der Sensoroberfläche (23) des Substrats (10) angeordnet sind, wobei
ein erster wärmeempfindlicher Widerstand (12) an einer benachbarten stromaufwärtigen Seite des Heizwiderstands (11) angeordnet ist und ein zweiter wärmeempfindlicher Widerstand (13) an einer benachbarten stromabwärtigen Seite des Heizwiderstands (11) bezogen auf die Strömungsrichtung des zu messenden Fluids angeordnet ist,
jeder der wärmeempfindlichen Widerstände (12, 13) erste Widerstandsbahnteile (14) umfasst, die parallel zu der Strömungsrichtung des zu messenden Fluids verlaufen, und zweite Widerstandsbahnteile (15), die senkrecht zu der Strömungsrichtung des zu messenden Fluids verlaufen,
die ersten Widerstandsbahnteile (14) und die zweiten Widerstandsbahnteile (15) des ersten wärmeempfindlichen Widerstands (12) und des zweiten wärmeempfindlichen Widerstands (13) für jeden der wärmeempfindlichen Widerstände (12, 13) quadratförmige und spiralartige wärmeempfindliche Widerstandabschnitte (16) bilden;
einen elektronischen Schaltkreis (17) zum Bestimmen der Strömungsrate des zu messenden Fluids auf der Grundlage von Signalen, die von den wärmeempfindlichen Widerständen (12, 13) geliefert werden;
**dadurch gekennzeichnet, dass**
an der stromaufwärtigen Seite des Heizwiderstands (11) und der stromabwärtigen Seite des Heizwiderstands (11) jeweils ein wärmeempfindlicher Widerstand (12, 13) angeordnet ist;
die beiden wärmeempfindlichen Widerstände (12, 13), die auf dem Substrat (10) angeordnet sind, zusammen mit Widerständen (19, 20), die auf einer Leiterplatte (18) bereitgestellt sind, eine Brückenschaltung (21) bilden, wobei die Leiterplatte (18) den elektronischen Schaltkreis (17) bereitstellt;
die Widerstandsbahnteile (14, 15) jedes wärmeempfindlichen Widerstands (12, 13) für jeden der wärmeempfindlichen Widerstände (12, 13) drei quadratförmige und spiralartige wärmeempfindliche Widerstandabschnitte (16) bilden, die in der Richtung senkrecht zu der Strömungsrichtung des zu messenden Fluids unmittelbar nebeneinander angeordnet sind.

2. Fluidströmungssensor gemäß Anspruch 1, **dadurch gekennzeichnet, dass** die auf der Leiterplatte (18) angeordneten Widerstände (19, 20), die zusammen mit wärmeempfindlichen Widerständen (12, 13), die auf dem Substrat (10) angeordnet sind, die Brückenschaltung (21) bilden, unter Betriebsbedingungen des Fluidströmungssensors nicht wärmeempfindlich sind.

3. Fluidströmungssensor gemäß Anspruch 1 oder 2, **dadurch gekennzeichnet, dass** die Summe der Länge der zweiten Widerstandsbahnteile (15), die senkrecht zu der Strömungsrichtung verlaufen, größer als die Summe der Länge der ersten Widerstandsbahnteile (14), die parallel zu der Strömungsrichtung verlaufen, ist.

4. Fluidströmungssensor gemäß einem der Ansprüche 1 bis 3, **dadurch gekennzeichnet, dass** das Verhältnis der Summe der Länge der zweiten Widerstandsbahnteile (15), die senkrecht zu der Strömungsrichtung verlaufen, zu der Summe der Länge der ersten Widerstandsbahnteile (14), die parallel zu der Strömungsrichtung verlaufen, zwischen 1,3 und 1,7 beträgt.

5. Fluidströmungssensor gemäß Anspruch 4, **dadurch gekennzeichnet, dass** das Verhältnis der Summe der Länge der zweiten Widerstandsbahnteile (15), die senkrecht zu der Strömungsrichtung verlaufen, zu der Summe der Länge der ersten Widerstandsbahnteile (14), die parallel zu der Strömungsrichtung verlaufen, zwischen 1,4 und 1,6 beträgt.

6. Fluidströmungssensor gemäß Anspruch 5, **dadurch gekennzeichnet, dass** das Verhältnis der Summe der Länge der zweiten Widerstandsbahnteile (15), die senkrecht zu der Strömungsrichtung verlaufen, zu der Summe der Länge der ersten Widerstandsbahnteile (14), die parallel zu der Strömungsrichtung verlaufen, etwa 1,5 beträgt.

## Revendications

1. Capteur d'écoulement de fluide, comportant
un substrat (10) présentant une surface (23) de détection qui peut être amenée en contact direct ou indirect avec un fluide à mesurer ;
une résistance chauffante (11) disposé sur la surface (23) de détection du substrat (10) ;
des résistances thermosensibles (12, 13) disposées sur la surface (23) de détection du substrat (10),
une première résistance thermosensible (12) étant situé d'un côté amont adjacent de la résistance chauffante (11) et une deuxième résistance thermosensible (13) est situé d'un côté aval adjacent de la résistance chauffante (11) dans une direction d'écoulement du fluide à mesurer,
chacune des résistances thermosensibles (12, 13) comportant des premières parties (14) de trace de résistance s'étendant parallèlement à la direction d'écoulement du fluide à mesurer et des deuxièmes parties (15) de trace de résistance s'étendant perpendiculairement à la direction d'écoulement du fluide à mesurer,
les premières parties (14) de trace de résistance et les deuxièmes parties (15) de trace de résistance de la première résistance thermosensible (12) et de la deuxième résistance thermosensible (13) constituant pour chacune des résistances thermosensibles (12, 13) des (16) de résistance thermosensible sections de forme carrée et en spirale ;
un circuit électronique (17) servant à déterminer un débit du fluide à mesurer d'après des signaux fournis par les résistances thermosensibles (12, 13) ;
**caractérisé en ce que**
une résistance thermosensible (12, 13) est située de chaque côté parmi le côté amont de la résistance chauffante (11) et le côté aval de la résistance chauffante (11) ;
les deux résistances thermosensibles (12, 13) disposées sur le substrat (10) constituent, conjointement avec des résistances (19, 20) placées sur une carte (18) à circuit imprimé un circuit (21) de pont, la carte (18) à circuit imprimé formant le circuit électronique (17) ;
les parties (14, 15) de trace de résistance de chaque résistance thermosensible (12, 13) formant, pour chacune desdites résistances thermosensibles (12, 13) trois sections (16) de résistance thermosensible de forme carrée et en spirale qui sont positionnées immédiatement côte à côte dans la direction perpendiculaire à la direction d'écoulement du fluide à mesurer.

2. Capteur d'écoulement de fluide selon la revendication 1, **caractérisé en ce que** les résistances (19, 20) placées sur la carte (18) à circuit imprimé, qui constituent, conjointement avec les résistances thermosensibles (12, 13) placées sur le substrat (10), le circuit (21) de pont, sont non thermosensibles dans les conditions opérationnelles du capteur d'écoulement de fluide.

3. Capteur d'écoulement de fluide selon la revendication 1 ou 2, **caractérisé en ce que** la somme des longueurs des deuxièmes parties (15) de trace de résistance s'étendant perpendiculairement à la direction d'écoulement est supérieure à la somme des longueurs des premières parties (14) de trace de résistance s'étendant parallèlement à la direction d'écoulement.

4. Capteur d'écoulement de fluide selon l'une des revendications 1 à 3, **caractérisé en ce que** le rapport de la somme des longueurs des deuxièmes parties (15) de trace de résistance s'étendant perpendiculairement à la direction d'écoulement et de la somme des longueurs des premières parties (14) de trace de résistance s'étendant parallèlement à la direction d'écoulement est compris entre 1,3 et 1,7.

5. Capteur d'écoulement de fluide selon la revendication 4, **caractérisé en ce que** le rapport de la somme des longueurs des deuxièmes parties (15) de trace de résistance s'étendant perpendiculairement à la direction d'écoulement et de la somme des longueurs des premières parties (14) de trace de résistance s'étendant parallèlement à la direction d'écoulement est compris entre 1,4 et 1,6.

6. Capteur d'écoulement de fluide selon la revendication 5, **caractérisé en ce que** le rapport de la somme des longueurs des deuxièmes parties (15) de trace de résistance s'étendant perpendiculairement à la direction d'écoulement et de la somme des longueurs des premières parties (14) de trace de résistance s'étendant parallèlement à la direction d'écoulement est d'environ 1,5.
